# FASCICULE DE BREVET EUROPEEN

(11) **EP 0 387 110 B1**
(45) Date de publication et mention de la délivrance du brevet: **13.10.1993**
(21) Numéro de dépôt: 90400268.0
(22) Date de dépôt: 01.02.1990
(51) Int. Cl.: A01C 5/06

(54) **Dispositif de réglage de la profondeur des semis**
Tiefenreglung für Sämaschine
Depth control for a seed planter

(30) Priorité: 06.03.1989 FR 8902911
(43) Date de publication de la demande: 12.09.1990
(73) Titulaire: ATELIERS RIBOULEAU, F-79240 Largeasse (FR)
(72) Inventeur: Ribouleau, Michel, F-75015 Paris (FR)
(74) Mandataire: Polus, Camille

(56) Documents cités:
- DE-A- 2 024 914
- FR-A- 2 507 857
- US-A- 4 331 205
- US-A- 4 596 200
- Document "502 MONOSEM"

## Description

L'invention concerne un dispositif de réglage de la profondeur des semis pour un semoir monograine tel que décrit dans le préambule de la revendication 1. Un tel dispositif est connu d'après la documentation référencée "502 MONOSEM" de la demanderesse.

Les semoirs comportant de façon générale un châssis qui supporte un distributeur de graines, un soc et une roue porteuse, la profondeur des semis est habituellement déterminée par la distance en hauteur qui séparez le soc de la roue porteuse. Selon les modes de réalisation cette roue porteuse est montée à l'avant du soc, à l'arrière de ce dernier, ce qui lui permet d'assurer également la fermeture du sillon, ou même à la fois à l'avant et à l'arrière du soc, le semoir comportant alors deux roues porteuses montées sur un bras balancier.

La roue porteuse est en outre, de préférence, montée par l'intermédiaire d'organes de longueur réglable qui permettent à la profondeur des semis d'être adaptée à chaque utilisation. On obtient ainsi de bons résultats lorsque le terrain est plat et bien préparé, mais sur des terrains mal préparés ou tourmentés, la profondeur des sillons n'est pas régulière et les irrégularités sont d'autant plus importantes que la roue porteuse est plus éloignée du soc.

Par ailleurs, on connaît des semoirs-disque ne comportant pas de soc, tels que décrits dans le brevet américain 4 331 205. Dans le semoir faisant l'objet de ce brevet américain, le sillon est réalisé par deux disques qui ne sont pas solidaires des roues porteuses ; la profondeur du sillon est déterminée par le réglage en hauteur des roues porteuses.

La présente invention a pour but de remédier à ces inconvénients en fournissant un dispositif de réglage de la profondeur des semis qui permette d'obtenir une profondeur constante quelle que soit la nature du terrain.

A cet effet, l'invention a pour objet un dispositif de réglage de la profondeur des semis du type précité qui est conforme à la partie caractéristique de la revendication 1.

Selon un mode de réalisation préféré, l'ensemble comporte deux roues porteuses et deux disques ouvreurs de sillons fixés chacun sur la face interne d'une roue porteuse et ayant un diamètre légèrement supérieur à celui de cette roue.

La distance entre les roues porteuses et le soc étant réduite à un minimum, ces organes suivent les accidents du terrain de manière pratiquement simultanée. En outre les disques ouvreurs préparent le terrain devant le soc, ce qui facilite l'action de ce dernier et évite les bourrages.

La description ci-dessous d'un mode de réalisation, donné à titre d'exemple non limitatif et représenté aux dessins annexés, fera d'ailleurs ressortir les avantages et caractéristiques de l'invention. Sur ces dessins :

La figure 1 est une vue schématique en élévation d'un semoir monté à l'arrière d'un tracteur.

La figure 2 est une vue en coupe suivant la ligne 2-2 de la Fig.1.

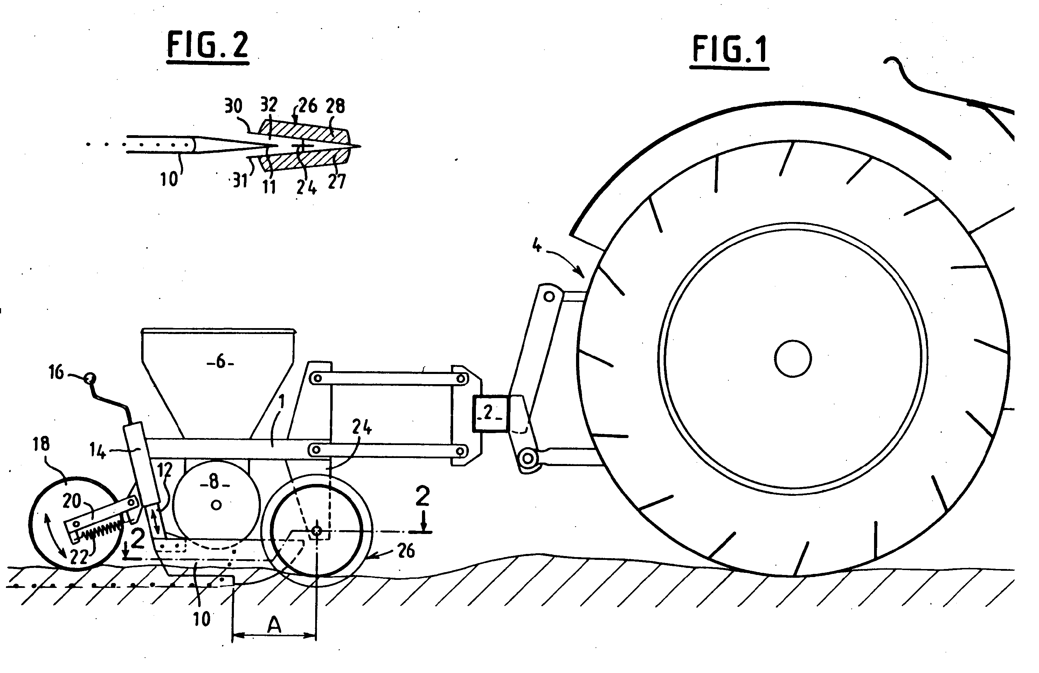

Le semoir représenté sur la Fig.1 comporte un châssis 1 qui est monté de manière traditionnelle, sur une barre porte-outils 2 qui permet son attelage à un tracteur 4 dont seule la roue arrière est visible sur la Fig.1. Sur le châssis 1 est montée une trémie de réserve de graines 6 qui communique à sa partie inférieure avec un boîtier de distribution 8 lâchant des graines une à une dans un soc 10 placé directement en dessous de lui.

Dans le mode de réalisation représenté sur la Fig.1, le soc 10 est porté par l'élément interne 12 d'une glissière dont l'élément externe 14 est fixé sur le châssis 1. Une manivelle 16 commande le déplacement de l'élément interne 12 et règle la position en hauteur du soc 10.

Le châssis 1 porte également une roue flottante 18 qui est montée sur un bras 20 articulé sur le châssis et est repoussée en direction du sol par un ressort de pression 22. Cette roue arrière flottante 18 assure ainsi la fermeture du sillon.

A l'opposé de la roue 18, c'est-à-dire à l'avant du soc 10, le châssis 1 comporte un bras vertical 24 à l'extrémité duquel est monté un ensemble porteur 26. L'ensemble 26 comporte deux roues porteuses respectivement 27 et 28 qui sont inclinées l'une par rapport à l'autre de façon à diverger en direction du soc 10. Cet ensemble 26 a ainsi une section droite horizontale en forme de V dont l'ouverture évasée est tournée vers le soc 10 (Fig.2) et a une largeur suffisante pour permettre la libre pénêtration de l'extrémité avant pointue, 11 du soc 10 entre les roues porteuses 27 et 28. La distance A entre le bras 24, ou le centre de l'ensemble porteur 26, et le soc 10 est donc trés réduite.

Chacune des roues 27 et 28 est solidaire d'un disque plat 30, 31 qui lui est coaxial mais a un diamètre légèrement supérieur. Les disques 30, 31 sont bien entendu inclinés l'un par rapport à l'autre de la même manière que les roues porteuses 27 et 28 et ils constituent ainsi un dispositif ouvreur de sillons à l'avant du soc 10. Les disques plats 30 et 31 sont placés sur les faces en regard des roues 27 et 28 et ils délimitent ainsi entre eux le logement 32 de section droite horizontale en V dans lequel pénêtre l'avant du soc 10.

Dans le mode de réalisation représenté les deux roues 27 et 28 de même que les deux disques 30 et 31 sont identiques entre eux et inclinés de la même manière par rapport au plan médian du soc 10. Il est bien évident toutefois que les disques peuvent avoir des diamètres légèrement différents et/ou être décalés l'un d'eux étant plus en avant que l'autre, les deux roues étant de même diamètre.

Grâce à cette disposition, les roues porteuses 27 et 28 et le soc 10 sont trés proches et subissent presque en même temps les variations du niveau du terrain, de sorte que la hauteur des roues porteuses par rapport au soc reste pratiquement constante même sur un terrain tourmenté. En outre, les disques ouvreurs de sillons assurent constamment une préparation du terrain en fendant la terre et en tranchant les mottes devant le soc, ce qui supprime pratiquement les risques de bourrage devant ce dernier. On obtient ainsi un terrage particulièrement régulier, de la profondeur désirée, quelle que soit la nature du terrain.

Selon une variante de réalisation (non représentée) le soc 10 est monté sur un ensemble 12, 14 dont la longueur est fixe, tandis que le bras 24 est remplacé par un bras télescopique permettant un réglage en hauteur de l'ensemble roues porteuses ouvreurs de sillons et ainsi une adaptation de la profondeur du sillon au terrain et/ou à la nature des graines.

Bien entendu le semoir ainsi réalisé peut être utilisé seul ou être associé à d'autres semoirs identiques portés par la même barre porte outils 2 pour former un semoir à plusieurs rangs.

## Revendications

1. Dispositif de réglage de la profondeur des semis pour un semoir monograin comportant un châssis (1) qui supporte un distributeur de graines (8), un soc (10) et un ensemble porteur, la profondeur du semis étant déterminé par la différence de hauteur entre le bas dudit ensemble porteur et le bas du soc du semis, caractérisé en ce que l'ensemble porteur (26) présente une section droite horizontale en forme V et est disposé juste à l'avant du soc (10) de telle manière que l'avant (11) du soc (10) pénètre dans l'extrémité évasée dudit ensemble porteur (26).

2. Dispositif selon la revendication 1, caractérisé en ce que l'ensemble porteur comporte deux roues porteuses (27, 28) qui divergent en direction du soc (10).

3. Dispositif suivant l'une des revendications 1 et 2, caractérisé en ce que l'ensemble porteur (26) comporte des disques ouvreurs de sillons (30, 31).

4. Dispositif suivant la revendication 3, caractérisé en ce que l'ensemble porteur ouvreur de sillons (26) comporte deux disques (30, 31) de diamètre supérieur à celui des roues porteuses (27, 28) qui sont fixés coaxialement sur les faces en regard de ces roues.

5. Dispositif suivant l'une des revendications précédentes, caractérisé en ce que le soc (10) est monté sur le châssis (1) par l'intermédiaire d'une glissière réglable (12, 14).

6. Dispositif suivant l'une des revendications 1 à 4, caractérisé en ce que l'ensemble porteur-ouvreur de sillons (26) est monté sur le châssis (1) par l'intermédiaire d'un organe télescopique de réglage de sa position en hauteur.

7. Dispositif suivant l'une des revendications précédentes, caractérisé en ce que l'ensemble porteur (26) est supporté par un bras (24) du châssis (1) et en ce que l'extrémité avant (11) du soc est proche dudit bras (24).

8. Dispositif suivant l'une des revendications précédentes, caractérisé en ce que les deux roues porteuses (27, 28) et les deux disques (30, 31) sont identiques entre eux.

9. Dispositif suivant l'une des revendications 1 à 7, caractérisé en ce que les deux disques (30, 31) ont des diamètres légèrement différents.

10. Dispositif suivant l'une des revendications précédentes, caractérisé en ce qu'une roue flottante (18) de fermeture du sillon est montée sur le châssis (1) à l'arrière du soc (10).

## Patentansprüche

1. Vorrichtung zum Einstellen der Sätiefe eines Einzelorndrillgerätes mit einem Gestell (1), das einen Kornverteiler (8), eine Drillschar (10) und eine Stützeinheit trägt, wobei die Sätiefe durch die Höhendifferenz zwischen der Unterseite der genannten Stützeinheit und der Unterseite der Drillschar bestimmt wird, dadurch **gekennzeichnet,** daß die Stützeinheit (26) einen V-förmigen waagerechten Querschnitt aufweist und in der Weise unmittelbar vor der Drillschar (10) angeordnet ist, daß der vordere Bereich (11) der Drillschar (10) in das offene Ende der Stützeinheit (26) hineinragt.

2. Vorrichtung nach Anspruch 1, dadurch **gekennzeichnet,** daß die Stützeinheit zwei Landräder (27,28) aufweist, die in Richtung auf die Drillschar (10) auseinanderstreben.

3. Vorrichtung nach Anspruch 1 oder 2, dadurch **gekennzeichnet,** daß die Stützeinheit (26) Furchenöffner-Scheiben (30,31) aufweist.

4. Vorrichtung nach Anspruch 3, dadurch **gekennzeichnet,** daß die Furchenöffner-Stützeinheit (26) zwei Scheiben (30,31) aufweist, deren Durchmesser größer ist als der der Landräder (27,28) und die koaxial an den einander zugewandten Flächen dieser Räder befestigt sind.

5. Vorrichtung nach einem der vorstehenden Ansprüche, dadurch **gekennzeichnet,** daß die Drillschar (10) über eine verstellbare Schiene (12,14) mit dem Gestel (1) verbunden ist.

6. Vorrichtung nach einem der Ansprüche 1 bis 4. dadurch **gekennzeichnet,** daß die Furchenöffner-Stützeinheit (26) über ein in der Höhe verstellbares Teleskoporgan mit dem Gestell (1) verbunden ist.

7. Vorrichtung nach einem der vorstehenden Ansprüche, dadurch **gekennzeichnet,** daß die Stützeinheit (26) durch einen Arm (24) des Gestells (1) gehalten ist und daß das vordere Ende (11) der Drillschar sich in der Nähe dieses Armes (24) befindet.

8. Vorrichtung nach einem der vorstehenden Ansprüche. dadurch **gekennzeichnet,** daß die beiden Landräder (27,28) und die beiden Scheiben (30,31) untereinander identisch sind.

9. Vorrichtung nach einem der Ansprfüche 1 bis 7, dadurch **gekennzeichnet,** daß die beiden Scheiben (30,31) etwas verschiedene Durchmesser besitzen.

10. Vorrichtung nach einem der vorstehenden Ansprüche, dadurch **gekennzeichnet,** daß ein Schlepprad (18) zum Schießen der Furche hinter der Drillschar (10) an dem Gestell (1) montiert ist.

## Claims

1. Device for regulating the seed depth for a seed spacing drill, comprising a frame (1) which supports a grain distributor (8), a coulter (10) and a carrying assembly, the seed depth being pre-determined by the difference in height between the base of the said carrying assembly and the base of the seed coulter, characterised in that the carrying assembly (26) has a V-shaped horizontal cross section and is arranged just in front of the coulter (10) in such a way that the front (11) of the coulter (10) enters the flared end of the said carrying assembly (26).

2. Device according to claim 1, characterised in that the carrying assembly comprises two carrying wheels (27, 28) which diverge in the direction of the coulter (10).

3. Device according to either of claims 1 and 2, characterised in that the carrying assembly (26) comprises discs (30, 31) for opening up furrows.

4. Device according to claim 3, characterised in that the carrying and furrow-opening assembly (26) comprises two discs (30, 31) which have a diameter greater than that of the carrying wheels (27, 28) and are fixed coaxially to the opposing surfaces of these wheels.

5. Device according to one of the preceding claims, characterised in that the coulter (10) is mounted on the frame (1) by means of an adjustable slide (12, 14).

6. Device according to one of claims 1 to 4, characterised in that the carrying and furrow-opening assembly (26) is mounted on the frame (1) by means of a telescopic element for regulating its height position.

7. Device according to one of the preceding claims, characterised in that the carrying assembly (26) is supported by an arm (24) of the frame (1) and in that the front end (11) of the coulter is close to the said arm (24).

8. Device according of one of the preceding claims, characterised in that the two carrying wheels (27, 28) and the two discs (30, 31) are identical to each other.

9. Device according to one of claims 1 to 7, characterised in that the two discs (30, 31) have slightly different diameters.

10. Device according to one of the preceding claims, characterised in that a floating wheel (18) for closing the furrow is mounted on the frame (1) behind the coulter (10).
